# DEMANDE DE BREVET EUROPEEN

(11) **EP 0 737 903 A2**
(43) Date de publication de la demande: **16.10.1996**
(21) Numéro de dépôt: 96420117.2
(22) Date de dépôt: 10.04.1996
(51) Int. Cl.: G05B 19/4065

(54) **Procédé et dispositif de contrôle d'usinage sur machine-outil**

(30) Priorité: 14.04.1995 FR 9504699
(71) Demandeur: ETUDES REALISATIONS REPRESENTATIONS INDUSTRIELLES ET COMMERCIALES, 74950 Scionzier (FR)
(72) Inventeur: Dufour, Claude, 74300 Thyez (FR)
(74) Mandataire: Poncet, Jean-François

(57) **Abrégé**

Le dispositif selon l'invention vérifie, notamment au voisinage de l'instant de début d'usinage de chaque pièce par un outil, le courant électrique traversant le contact entre l'outil (6) et la pièce (2) à usiner. Pour cela, le porte-outil (5) est isolé du bâti (8) par des moyens isolants (9), et des conducteurs (10) forment un circuit électrique avec un générateur de tension (12) et un capteur de courant (14) qui communique à un comparateur (17) la valeur du courant électrique vérifié. En l'absence de courant approprié indiquant l'existence d'un contact à l'instant de début d'usinage ou pendant une plage de durée de vérification déterminée, on en déduit que l'outil (6) est usé ou que la pièce (2) est mal positionnée.

## Description

La présente invention concerne les machines-outils, dans lesquelles une pièce tenue par une broche porte-pièce et des outils tenus par un porte-outil sont déplacés les uns par rapport aux autres au cours d'un cycle d'usinage pour produire une pièce.

L'invention se rapporte en particulier aux machines à décolleter telles que les tours monobroche à poupée fixe ou à poupée mobile, et les tours multibroche.

La production de pièces dont les dimensions sont précises nécessite un contrôle efficace.

Le plus souvent, le contrôle est effectué a posteriori, en mesurant les dimensions de chaque pièce obtenue. Toutefois, un tel contrôle nécessite une reprise de la pièce, et il est effectué trop longtemps après la production de la pièce, de sorte que les pièces suivantes peuvent également être défectueuses lorsqu'on a constaté le défaut sur ladite pièce. Il en résulte une baisse de rendement et une baisse de qualité.

Il apparaît donc utile de prévoir un contrôle d'usinage qui s'effectue le plus tôt possible au cours de l'usinage de la pièce elle-même, sans toutefois ralentir cet usinage.

Le document EP-A-0 363 902 décrit un dispositif et un procédé de contrôle d'usinage par la mesure et la vérification de la résistance électrique de contact entre l'outil et la pièce. Le document décrit les moyens pour mesurer avec une bonne précision la résistance électrique de contact, en éliminant l'effet perturbateur de la force électromotrice apparaissant dans la zone de contact qui se trouve à haute température pendant l'usinage. Pour cela, on fait passer un courant électrique intermittent dans la zone de contact entre la pièce et l'outil, et l'on mesure les différences de potentiel entre la pièce et l'outil. La résistance de contact est déduite par calcul, et est comparée à une série de valeurs de résistance de contact correspondant à la fois au type d'outil utilisé et aux matériaux formant la pièce à usiner.

Outre sa relative complexité, puisqu'il faut prévoir des moyens pour générer un courant intermittent, des moyens pour mesurer une différence de potentiel à des instants différents, et des moyens pour calculer ensuite et comparer la résistance de contact, ce dispositif et ce procédé ne prennent pas en compte tous les paramètres pouvant perturber la mesure, notamment la présence d'huile de coupe conductrice ou isolante dans la zone de contact, la nature du matériau constituant la pièce à usiner, la nature du matériau constituant l'outil, la forme de l'outil et de la pièce, les paramètres d'usinage. Le procédé nécessite en outre d'utiliser des outils en des matériaux particuliers.

Le document EP-A-0 165 745 enseigne de mesurer en permanence, pendant l'usinage, un paramètre tel qu'un courant de court-circuit, et de détecter l'augmentation rapide de la pente de ce paramètre indiquant l'imminence d'une rupture d'outil. Seule la rupture imminente d'outil est détectée par ce procédé. Cela ne permet pas de détecter les défauts qui, sans rupture d'outil, produisent des pièces néanmoins défectueuses.

Le document US-A-3 728 621 enseigne de mesurer en permanence, pendant l'usinage, la tension de contact en présence d'un courant constant, et d'en déduire l'usure des arêtes de coupe de l'outil par comparaison avec un tableau de valeurs. Ce procédé ne donne toutefois qu'une valeur moyenne d'usure, et ne peut garantir la qualité des pièces produites. Il n'intègre pas, non plus, les nombreux paramètres pouvant perturber la mesure.

Le document EP-A-0 509 817 décrit un système expert complexe et onéreux pour prédire la durée de vie d'un outil, par enregistrement de plusieurs séries de paramètres pendant plusieurs cycles d'usinage, et enregistrement de mesures de l'usure de l'outil. Cela ne permet pas de contrôler de façon fiable la qualité des pièces produites.

Le problème proposé par la présente invention est de concevoir un nouveau procédé et un dispositif fiable et peu onéreux permettant le contrôle d'usinage de séries de pièces conductrices de l'électricité par un outil sur une machine-outil pendant ledit usinage, ce contrôle devant procurer des informations suffisantes pour connaître la qualité de la pièce qui sera obtenue, pour éviter la production d'une pièce défectueuse, et pour avertir l'utilisateur dès qu'une intervention est nécessaire.

Pour atteindre ces objets ainsi que d'autres, dans un procédé de contrôle d'usinage de séries de pièces conductrices de l'électricité par un outil sur une machine-outil, l'invention prévoit, au cours du cycle d'usinage de certaines au moins des pièces, au moins une étape de contrôle pendant au moins une plage temporelle limitée prédéterminée de contrôle, étape au cours de laquelle on connecte un générateur de tension électrique entre le porte-outil et la broche porte-pièce et on vérifie qu'un courant électrique de contact approprié, compris dans une plage admissible de courant de contact, traverse la zone de contact entre l'outil porté par le porte-outil et la pièce tenue par la broche porte-pièce, et on produit un signal de défaut en cas de détection d'un courant électrique de contact non approprié pendant ladite plage temporelle de contrôle.

Ainsi, l'idée qui est à la base de l'invention est d'effectuer un contrôle en associant la variable de temps et la variable de qualité du contact entre l'outil et la pièce. Le contrôle s'effectue ainsi de façon précise au voisinage d'instants bien définis dans le cycle d'usinage de chaque pièce, instants où la position du porte-outil, la position de la broche porte-pièce, et tous les autres paramètres qui déterminent en principe les conditions d'usinage doivent en principe se reproduire à l'identique d'une pièce à l'autre. Ces conditions d'usinage identiques déterminent la qualité du contact entre la pièce et l'outil, qualité que l'on détecte par mesure et comparaison du courant électrique traversant le contact, pour en déduire si l'usinage est normal ou non.

On vérifie ainsi la qualité du contact mécanique entre pièce et outil en mesurant le courant électrique traversant la zone de contact et en le comparant à au moins une valeur de seuil admissible de ce courant électrique de contact. Par le fait que chaque étape de contrôle s'effectue pendant une plage temporelle limitée, très inférieure à la durée du cycle d'usinage, les conditions d'usinage sont particulières pendant cette plage temporelle, de sorte que la plage admissible de courant peut être considérablement réduite, permettant une détection fine de conditions d'usinage susceptibles de produire des pièces défectueuses.

Selon l'invention, on peut notamment prévoir, pour chaque pièce contrôlée, au moins une étape de contrôle de début d'usinage dans la plage temporelle au cours de laquelle le contact entre l'outil et la pièce doit s'établir, le courant électrique de contact étant estimé non approprié s'il n'a pas, au cours de la plage temporelle, une augmentation brusque d'amplitude appropriée indiquant l'établissement du contact.

Egalement, on peut notamment prévoir, pour chaque pièce contrôlée, au moins une étape de contrôle en cours d'usinage dans une plage temporelle intermédiaire, le courant électrique de contact étant estimé non approprié s'il n'est pas compris dans une plage admissible respective de courant correspondant à ladite plage temporelle intermédiaire.

Eventuellement, on peut prévoir, pour chaque pièce contrôlée, au moins une étape de contrôle de fin d'usinage dans la plage temporelle au cours de laquelle le contact entre l'outil et la pièce doit cesser, le courant électrique de contact étant estimé non approprié s'il n'a pas, au cours de la plage temporelle, une diminution brusque d'amplitude appropriée indiquant la fin du contact.

Selon un mode de réalisation particulier, permettant de simplifier sensiblement le dispositif, le procédé comprend une procédure préalable d'apprentissage au cours de laquelle on effectue l'usinage d'une première série de pièces avec un même outil, en vérifiant a posteriori, par exemple de façon connue, à l'aide d'instruments de vérification traditionnels ou non, la qualité des pièces réalisées ; on mesure et on mémorise les valeurs du courant électrique de contact traversant la zone de contact pièce-outil lors des étapes de contrôle des cycles d'usinage desdites pièces de la première série, et on cesse ladite procédure d'apprentissage à l'obtention d'une première pièce défectueuse et d'une mesure correspondante du courant électrique de contact, la valeur limite de la plage admissible de courant étant choisie égale au courant électrique de contact mesuré lors de l'usinage de la dernière pièce correcte de ladite première série de pièces.

Un dispositif de contrôle d'usinage de pièce sur machine-outil selon l'invention, mettant en oeuvre un tel procédé, est adapté à une machine-outil comprenant au moins une broche porte-pièce adaptée pour tenir la pièce à usiner, avec des moyens pour déplacer la broche et des moyens pour repérer la position de la broche, comprenant au moins un porte-outil avec des moyens pour déplacer l'outil et des moyens pour repérer la position de l'outil, et comprenant des moyens de commande pour provoquer les mouvements des organes fonctionnels de la machine-outil selon une succession de cycles d'usinage et pour repérer les étapes de cycle d'usinage. Selon l'invention, le dispositif comprend :
- des moyens isolants pour isoler électriquement l'outil ou le porte-outil par rapport au bâti de la machine-outil,
- des conducteurs électriques pour assurer la connexion électrique de l'outil à la première borne de sortie d'un générateur de tension électrique dont la seconde borne est connectée à ladite pièce en cours d'usinage,
- un capteur de courant, pour mesurer le courant électrique dans lesdits conducteurs, et pour produire sur sa sortie un signal de mesure envoyé à un comparateur,
- un générateur de signaux électriques de seuil, adapté pour générer des signaux électriques de seuil constituant des seuils de signaux admissibles correspondant à une plage admissible de courant de contact, et pour envoyer lesdits signaux de seuil au comparateur,
- une mémoire pour mémoriser les limites d'au moins une plage temporelle de contrôle dans le cycle d'usinage de pièce,
- le comparateur étant adapté pour scruter la réception d'un signal de mesure à chaque plage temporelle d'étape de contrôle définie par la mémoire, pour comparer ce signal de mesure auxdits signaux de seuil et pour générer un signal de défaut en cas de valeur non admissible dudit signal de mesure.

D'autres objets, caractéristiques et avantages de la présente invention ressortiront de la description suivante d'un mode de réalisation particulier, faite en relation avec les figures jointes parmi lesquelles :
- la figure 1 représente schématiquement les organes essentiels d'un dispositif de contrôle d'usinage selon l'invention ;
- la figure 2 illustre schématiquement la forme d'onde du courant électrique traversant le contact outil-pièce pendant l'usinage d'une pièce ; et
- la figure 3 illustre schématiquement la forme d'onde du courant électrique traversant le contact outil-pièce pendant l'usinage d'une série de pièces avec un même outil.

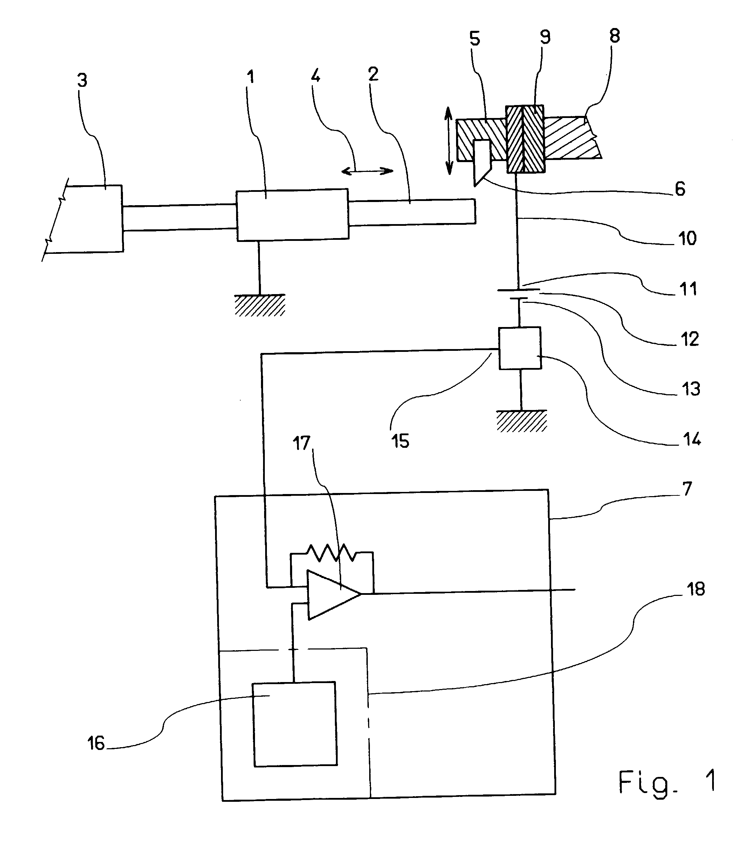

Comme illustré sur la figure 1, le dispositif est appliqué à une machine-outil comprenant au moins une broche porte-pièce 1 adaptée pour tenir la pièce à usiner 2. Avant usinage, la pièce à usiner 2 est souvent sous forme d'une barre, poussée par un dispositif d'avance de barre 3. La broche porte-pièce 1 entraîne la pièce 2 en rotation autour de son axe longitudinal, et peut commander les mouvements d'avance ou de recul de la pièce 2 comme illustré par la flèche 4. Des moyens permettent de repérer la position de la broche 1 au cours du cycle d'usinage.

Un porte-outil 5 est adapté pour porter un outil 6 et pour le déplacer dans les différentes positions d'usinage désirées au cours du cycle d'usinage. Des moyens permettent de repérer la position de l'outil 6.

Des moyens de commande 7 sont adaptés pour provoquer les mouvements des organes fonctionnels de la machine-outil tels que la broche porte-pièce 1 et le porte-outil 5 selon une succession de cycles d'usinage. Chaque cycle d'exécution de la pièce 2 comprend un ou plusieurs cycles d'outil commençant à des instants prédéterminés au cours dudit cycle d'exécution de pièce.

Dans le mode de réalisation illustré sur la figure 1, le porte-outil 5 est monté en déplacement sur des coulisses traditionnelles qui sont isolées du bâti 8 de la machine-outil par des moyens isolants 9. En alternative, des moyens isolants 9 peuvent être interposés entre le porte-outil 5 et l'outil 6. Dans tous les cas, les moyens isolants 9 isolent électriquement l'outil 6 par rapport au bâti 8 de la machine-outil.

Les moyens isolants 9 comprennent une couche de matériau dur et isolant électrique, pour assurer à la fois l'isolation électrique de l'outil 6 par rapport au bâti 8 et une tenue mécanique rigide de l'outil 6 pour assurer une bonne précision d'usinage.

Selon un mode de réalisation, le matériau dur et isolant est une couche de polytétrafluoroéthylène armé de fibres de verre.

Selon un autre mode de réalisation, le matériau dur et isolant est une couche d'alumine.

Des conducteurs électriques 10 assurent la connexion électrique de l'outil 6 à la première borne de sortie 11 d'un générateur de tension électrique 12 dont la seconde borne 13 est connectée à la pièce à usiner 2 en cours d'usinage. La connexion à la pièce 2 peut passer par la broche porte-pièce 1, comme illustré sur la figure, par la masse, ou par un contact tournant ou non avec un conducteur spécifique.

Un capteur de courant 14 est inséré dans le circuit électrique formé par les conducteurs 10, et permet de mesurer le courant électrique de contact dans lesdits conducteurs 10 et de produire sur sa sortie 15 un signal de mesure envoyé à un comparateur 17 pouvant être compris dans les moyens de commande 7.

L'invention prévoit une mémoire 16 pour mémoriser les limites d'au moins une plage temporelle de contrôle dans le cycle d'usinage de pièce, au choix de l'utilisateur.

L'invention prévoit en outre un générateur de signaux électriques de seuil 18, adapté pour générer des signaux électriques de seuil constituant des seuils de signaux admissibles correspondant à une plage admissible de courant de contact. La sortie du générateur de signaux électriques de seuil 18 est connectée à une entrée du comparateur 17, pour envoyer lesdits signaux de seuil au comparateur 17.

Par exemple, le générateur de seuil 18 peut comprendre la mémoire 16, dans laquelle est également enregistrée une échelle de valeurs de courant de contact, comportant au moins un seuil de valeurs admissibles I_{L} à partir duquel le courant de contact I correspond à un outil 6 ayant dépassé le degré d'usure admissible pour réaliser une pièce correcte. Le courant de contact est ainsi un paramètre physique représentatif de la qualité du contact pièce-outil.

Un mode de réalisation simplifié du générateur de seuil peut être un simple potentiomètre, actionné par l'utilisateur, et délivrant un courant ou une tension fixe choisi par l'utilisateur pour constituer un seuil maximum ou minimum de valeurs admissibles de courant de contact.

Le comparateur 17 est adapté pour scruter la réception du signal de mesure à chaque plage temporelle d'étape de contrôle définie dans la mémoire 16, et pour générer un signal de défaut en cas de présence d'un signal de mesure dont la valeur n'est pas admissible et indique que le contact entre la pièce et l'outil n'est pas approprié. Le signal de défaut est utilisé pour prévenir l'utilisateur et/ou forcer l'arrêt de l'usinage ou le changement d'outil.

Selon un mode de réalisation préféré, le capteur de courant 14 fournit en permanence un état du courant de contact entre l'outil 6 et la pièce 2. Cette mesure de courant de contact sert également de signal de détection : en l'absence de contact, le courant mesuré est nul ou très différent de celui qui existe en présence de contact, tandis qu'en présence du contact, le courant prend une valeur non nulle. Une valeur nulle ou très différente de courant détectée par le capteur de courant 14 constitue un signal de détection.

Le comparateur 17 peut être adapté pour comparer, pendant chaque plage temporelle d'étape de contrôle, la mesure de courant électrique de contact reçue du capteur de courant 14 et des valeurs de courant électrique de contact enregistrées dans la mémoire 16, et pour générer un signal de changement d'outil lorsque le courant de contact mesuré n'est pas compris dans les valeurs admissibles de courant de contact.

Ainsi, le dispositif représenté sur la figure effectue un contrôle d'usinage comportant, pour chaque pièce, au moins une étape de contrôle d'usinage au cours de laquelle la broche porte-pièce 1 et le porte-outil 5 sont dans des positions respectives prédéterminées d'usinage, et au cours de laquelle les conditions d'usinage sont a priori les mêmes pour chaque pièce d'une série de pièces à usiner. Pendant cette étape de contrôle, on vérifie qu'un courant électrique approprié, compris dans une plage admissible de courant de contact, traverse la zone de contact entre l'outil 6 porté par le porte-outil 5 et la pièce 2 tenue par la broche porte-pièce 1. Le caractère approprié ou satisfaisant du courant électrique traversant la zone de contact entre l'outil et la pièce est vérifié par la mesure, à l'instant prédéterminé d'usinage, du courant électrique et par sa comparaison aux seuils de valeurs admissibles.

En présence d'un courant électrique de contact non approprié pendant la plage déterminée de durée de vérification, un signal de défaut est émis qui est ultérieurement utilisé dans le cycle d'usinage pour générer le changement de pièce ou le changement d'outil.

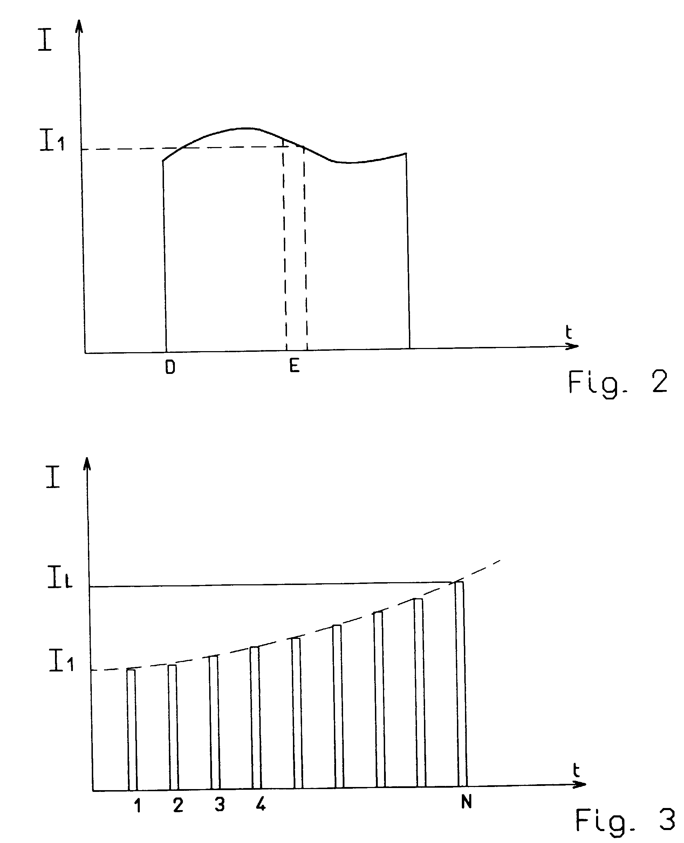

On a représenté sur la figure 2 une variation possible du courant électrique I de contact en fonction du temps lors d'un cycle d'outil, c'est-à-dire lors de l'usinage d'une pièce par un outil déterminé. Selon l'invention, une étape de contrôle intervient au cours de ce cycle d'outil, et on mesure alors la valeur I₁ que prend le courant électrique I au voisinage de cet instant E. Par cette mesure au voisinage immédiat d'un instant précis, l'invention permet d'éliminer l'influence de nombreux paramètres perturbateurs susceptibles de modifier le courant électrique I en fonction des conditions d'usinage.

Comme illustré sur la figure 3, au cours de l'usinage d'une série de pièces identiques par le même outil, on peut avantageusement effectuer une étape de contrôle au cours de chaque cycle d'outil pour chaque cycle d'usinage de pièce. On constate que les valeurs de courant électrique de contact mesurées au cours des cycles successifs d'outil dérivent dans le temps en fonction notamment des conditions d'usure de l'outil. Au bout de N cycles d'outil, on atteint une valeur limite I_{L}, qui précède juste l'instant à partir duquel la pièce suivante produite est défectueuse.

Ainsi, en comparant à chaque étape de contrôle la valeur I₁ mesurée du courant électrique de contact I à la valeur I_{L} limite ou aux seuils de valeurs admissibles, on peut en déduire si l'usinage est correct ou défectueux, et produire un signal de commande ou d'alerte lorsque l'usinage devient défectueux.

La valeur I_{L} limite de la plage admissible de courant électrique de contact I est déterminée par une procédure préalable d'apprentissage, au cours de laquelle on effectue l'usinage d'une première série de pièces avec un même outil, en vérifiant a posteriori, à l'aide d'instruments de vérification traditionnels, la qualité des pièces réalisées, on mesure et on mémorise les valeurs du courant électrique de contact I lors des étapes de contrôle des cycles d'usinage desdites pièces de la première série de pièces, et on cesse ladite procédure d'apprentissage à l'obtention d'une première pièce défectueuse ; la valeur limite I_{L} de la plage admissible de courant est choisie égale à la valeur mémorisée du courant I lors de l'étape de contrôle de la dernière pièce précédant une pièce défectueuse. I_{L} est mémorisée automatiquement dans le cas d'un dispositif de commande 7 programmé. On peut ainsi prévoir, par programmation du dispositif de commande 7, un dispositif d'apprentissage permettant de mémoriser en séquence les valeurs successives de plages temporelles de contrôle et de plages admissibles de courant associées. Dans le cas d'un dispositif de commande 7 simplifié, comportant par exemple un générateur de seuil 18 constitué d'un simple potentiomètre, l'utilisateur règle lui-même le potentiomètre à la valeur produisant sur le comparateur le signal de commande ou d'alerte dès qu'il constate que la pièce produite est défectueuse.

Une plage temporelle particulière du cycle d'outil, permettant un contrôle très efficace, est la plage temporelle environnant l'instant de début de cycle D comme illustré sur la figure 2. Juste avant cet instant, le courant électrique de contact I a normalement une valeur nulle, et, après cet instant, le courant I prend une valeur très différente de la valeur 0. L'apparition d'une valeur appropriée non nulle du courant I au cours de cette première plage temporelle de contrôle donne plusieurs informations : tout d'abord, la pièce est vraisemblablement bien positionnée sur la broche porte-pièce également, l'outil a vraisemblablement une géométrie correcte, indiquant un degré d'usure admissible ; également, l'ébauche destinée à former la pièce a une dimension correcte, qui permettra de réaliser une pièce correcte, et l'ébauche est effectivement en bonne place sur la broche porte-pièce.

Par contre, un défaut d'apparition d'une valeur appropriée de courant I au cours de cette première plage temporelle de contrôle indique la présence d'un défaut, soit dans la pièce, soit dans l'outil, et la détection de ce défaut de simultanéité permet d'émettre immédiatement un signal de commande ou d'avertissement, sans poursuivre l'usinage qui produirait une pièce défectueuse.

Ainsi, le procédé selon l'invention permet de détecter, en début de cycle d'outil, un défaut d'outil ou un défaut de matière. Il permet également, au cours de chaque cycle d'outil ou de chaque cycle de réalisation de pièce, de détecter une usure anormale d'outil ou une cassure d'outil.

Au cours des étapes d'usinage des pièces des séries ultérieures, le contrôle s'effectue au cours des mêmes plages temporelles limitées prédéterminées de contrôle que lors de la première série de pièces. L'utilisateur peut avantageusement affiner le contrôle d'usinage en modifiant, en début d'usinage des séries ultérieures de pièces, l'un au moins des paramètres consistant dans la durée de plage temporelle de contrôle et l'étendue de plage admissible de courant, pour maximiser le nombre de pièces correctes usinées par l'outil.

Selon l'invention, il peut être avantageux d'utiliser un générateur de tension 12 produisant une tension modulée, par exemple une tension continue à laquelle est superposée une tension de modulation dont la forme d'onde est déterminée. La mesure de la forme d'onde du courant débité dans le contact entre la pièce 2 et l'outil 6 peut donner des informations supplémentaires sur la qualité de l'usinage obtenu. Ces informations supplémentaires peuvent servir pour générer un signal de commande ou d'alerte dans le cas où l'usinage deviendrait défectueux.

La présente invention n'est pas limitée aux modes de réalisation qui ont été explicitement décrits, mais elle en inclut les diverses variantes et généralisations contenues dans le domaine des revendications ci-après.

## Revendications

1. Procédé de contrôle d'usinage de séries de pièces par un outil sur une machine-outil, les pièces étant conductrices de l'électricité, caractérisé en ce qu'il comprend, au cours du cycle d'usinage de certaines au moins des pièces, au moins une étape de contrôle pendant au moins une plage temporelle limitée prédéterminée de contrôle, étape au cours de laquelle on connecte un générateur de tension électrique entre le porte-outil (5) et la broche porte-pièce (1) et on vérifie qu'un courant électrique de contact approprié (I), compris dans une plage admissible de courant de contact, traverse la zone de contact entre l'outil (6) porté par le porte-outil (5) et la pièce (2) tenue par la broche porte-pièce (1), et on produit un signal de défaut en cas de détection d'un courant électrique (I) de contact non approprié pendant ladite plage temporelle de contrôle.

2. Procédé selon la revendication 1, caractérisé en ce qu'il comprend, pour chaque pièce contrôlée, au moins une étape de contrôle de début d'usinage dans la plage temporelle au cours de laquelle le contact entre l'outil et la pièce doit s'établir, le courant électrique (I) de contact étant estimé non approprié s'il n'a pas, au cours de la plage temporelle, une augmentation brusque d'amplitude appropriée indiquant l'établissement du contact.

3. Procédé selon l'une quelconque des revendications 1 ou 2, caractérisé en ce qu'il comprend, pour chaque pièce contrôlée, au moins une étape de contrôle en cours d'usinage dans une plage temporelle intermédiaire, le courant électrique (I) de contact étant estimé non approprié s'il n'est pas compris dans une plage admissible respective de courant correspondant à ladite plage temporelle intermédiaire.

4. Procédé selon l'une quelconque des revendications 1 à 3, caractérisé en ce qu'il comprend, pour chaque pièce contrôlée, au moins une étape de contrôle de fin d'usinage dans la plage temporelle au cours de laquelle le contact entre l'outil et la pièce doit cesser, le courant électrique (I) de contact étant estimé non approprié s'il n'a pas, au cours de la plage temporelle, une diminution brusque d'amplitude appropriée indiquant la fin du contact.

5. Procédé selon l'une quelconque des revendications 1 à 4, caractérisé en ce qu'il comprend une procédure préalable d'apprentissage au cours de laquelle on effectue l'usinage d'une première série de pièces avec un même outil, en vérifiant a posteriori, à l'aide d'instruments de vérification, la qualité des pièces réalisées, et en mesurant et en mémorisant les valeurs du courant électrique (I) de contact lors des étapes de contrôle des cycles d'usinage desdites pièces de la première série, et on cesse ladite procédure d'apprentissage à l'obtention d'une première pièce défectueuse et d'une mesure correspondante du courant électrique (I) de contact, la valeur limite (I_{L}) de la plage admissible de courant étant choisie égale au courant électrique (I) de contact mesuré lors de l'usinage de la dernière pièce correcte de ladite première série de pièces.

6. Procédé selon la revendication 5, caractérisé en ce qu'on modifie, en début d'usinage des séries ultérieures de pièces, l'un au moins des paramètres consistant dans la durée de plage temporelle de contrôle et l'étendue de plage admissible de courant, pour maximiser le nombre de pièces correctes usinées par l'outil.

7. Dispositif de contrôle d'usinage d'une pièce (2) sur machine-outil, mettant en oeuvre un procédé selon l'une quelconque des revendications 1 à 6, la machine-outil comprenant au moins une broche porte-pièce (1) adaptée pour tenir la pièce (2) à usiner, avec des moyens pour déplacer la broche (1) et des moyens pour repérer la position de la broche (1), au moins un porte-outil (5) avec des moyens pour déplacer l'outil (6) et des moyens pour repérer la position de l'outil (6), des moyens de commande (7) pour provoquer les mouvements des organes fonctionnels (5, 1) de la machine-outil selon une succession de cycles d'usinage et pour repérer les étapes du cycle d'usinage, caractérisé en ce qu'il comprend :
- des moyens isolants (9) pour isoler électriquement l'outil (6) ou le porte-outil (5) par rapport au bâti (8) de la machine-outil,
- des conducteurs électriques (10) pour assurer la connexion électrique de l'outil (6) à la première borne de sortie (11) d'un générateur de tension électrique (12) dont la seconde borne (13) est connectée à ladite pièce (2) en cours d'usinage,
- un capteur de courant (14), pour mesurer le courant électrique dans lesdits conducteurs (10), et pour produire sur sa sortie (15) un signal de mesure envoyé à un comparateur (17),
- un générateur de signaux électriques de seuil (18), adapté pour générer des signaux électriques de seuil constituant des seuils de signaux admissibles correspondant à une plage admissible de courant de contact, et pour envoyer lesdits signaux de seuil au comparateur (17),
- une mémoire (16) pour mémoriser les limites d'au moins une plage temporelle de contrôle dans le cycle d'usinage de pièce,
- le comparateur (17) étant adapté pour scruter la réception d'un signal de mesure à chaque plage temporelle d'étape de contrôle définie par la mémoire (16), pour comparer ce signal de mesure auxdits signaux de seuil et pour générer un signal de défaut en cas de valeur non admissible dudit signal de mesure.

8. Dispositif selon la revendication 7, caractérisé en ce que le générateur de seuil (18) comprend la mémoire (16), dans laquelle est également enregistrée une échelle de valeurs de courant électrique, comportant au moins un seuil de valeurs admissibles (I_{L}) à partir duquel le courant électrique correspond à un outil (6) ayant dépassé le degré d'usure admissible pour réaliser une pièce correcte.

9. Dispositif selon l'une des revendications 7 ou 8, caractérisé en ce qu'il comprend un dispositif d'apprentissage pour mémoriser en séquence les valeurs successives de plages temporelles de contrôle et de plages admissibles de courant associées.

10. Dispositif selon l'une quelconque des revendications 7 à 9, caractérisé en ce que les moyens isolants (9) comprennent une couche de matériau dur et isolant électrique telle qu'une couche de polytétrafluoroéthylène armé de fibres de verre, ou une couche d'alumine.
